# EUROPEAN PATENT APPLICATION

(11) **EP 2 535 368 A1**
(43) Date of publication of application: **19.12.2012**
(21) Application number: 11739690.3
(22) Date of filing: 28.01.2011
(51) Int. Cl.: C08J 3/03, B32B 27/28, C08F 8/32, C08K 3/28, C08K 5/17, C08L 23/26, C08L 33/02, C09D 123/26, C09D 133/02

(54) **AQUEOUS DISPERSION AND PROCESS FOR PRODUCTION THEREOF, AND LAMINATE**

(30) Priority: 16.04.2010 JP 2010095090; 08.02.2010 JP 2010025612; 08.02.2010 JP 2010025613
(71) Applicant: Du Pont-Mitsui Polychemicals Co., Ltd., Tokyo 105-7117 (JP)
(72) Inventor: ITO, Toshihiro, Ichihara-shi Chiba 299-0108 (JP); FUJIWARA, Akira, Ichihara-shi Chiba 299-0108 (JP)
(74) Representative: Gulde Hengelhaupt Ziebig & Schneider
(86) International application number: PCT/JP2011/051815
(87) International publication number: WO 2011/096341

(57) **Abstract**

Provided is a process for producing an aqueous dispersion liquid, wherein, in an aqueous medium, an ethylene/(meth)acrylic acid copolymer (A) containing (meth)acrylic acid-derived constituent units in an amount of 8% by mass or more is neutralized by using an alkanolamine (B) and dispersed. The above-described alkanolamine (B) is preferably represented by general formula (1) below. 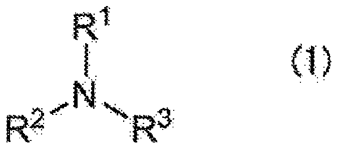 [In general formula (1) above, R¹ to R³ represent independently of each other a hydrogen atom, an alkyl group, or a saturated aliphatic hydrocarbon group having one hydroxyl group, and at least one of R¹ to R³ represents a saturated aliphatic hydrocarbon group having one hydroxyl group.]

## Description

### TECHNICAL FIELD

The present invention relates to an aqueous dispersion liquid and a process for producing the same, and a layered body.

### BACKGROUND ART

Aqueous dispersion liquids of an ethylene/unsaturated carboxylic acid copolymer represented by an ethylene/acrylic acid copolymer and an ethylene/methacryl acid copolymer have long been known, and various ones are commercially available. Among them, a dispersion liquid in which the above-described copolymer is dispersed in water using an alkali metal compound can be easily produced and has relatively mild restrictions on starting copolymers. Therefore, the dispersion liquid obtained by dispersing the above-described copolymer in water has been widely used.

However, since a coating film obtained by applying this dispersion liquid to a substrate has poor water resistance, the coating film cannot be used as it is for applications that require water resistance.

Meanwhile, although an aqueous dispersion liquid in which a polymer is dispersed in water using ammonia is slightly difficult to produce, a coating film obtained by this aqueous dispersion liquid has an advantage of excellent water resistance.
In particular, it is widely known that an ethylene/acrylic acid copolymer is excellent as a starting copolymer that can be used as an aqueous dispersion liquid using ammonia. For example, it is disclosed that adding a very small amount of inorganic salts or organic salts in an ethylene/(meth)acrylic acid copolymer aqueous solution significantly reduces viscosity (see, for example, Patent Document 1).

On the other hand, an ethylene/methacryl acid copolymer that exhibits good dispersibility in an aqueous dispersion liquid using an alkali metal is, in general, extremely difficult to disperse using ammonia alone. An aqueous dispersion liquid of an ethylene/methacryl acid copolymer is said to be able to be obtained by addition of, for example, a surfactant as a minor supplementary dispersant. However, the addition of a minor supplementary dispersant to the above-described aqueous dispersion liquid is not preferable in terms of, for example, water resistance of a coating film and a problem of stains due to bleeding out.

With reference to such circumstances, there is disclosed an aqueous dispersion liquid obtained by neutralization using an ethylene/methacryl acid copolymer with a certain acid content and using ammonia in an excess amount compared to a number of moles of carboxyl groups in the ethylene/methacryl acid copolymer (see, for example, Patent Document 2). It is described therein that a stable aqueous dispersion liquid cannot be obtained if the amount of ammonia used (the degree of neutralization) is small.
Further, an aqueous dispersion liquid obtained by neutralization using ammonia in an amount of 50 to 120 mol% based on a number of moles of carboxyl groups in an ethylene/methacryl acid copolymer is known (see, for example, Patent Document 3). For a stable dispersion with such an ammonia amount, it is necessary to additionally use metal ions in combination.

Therefore, with respect to the dispersion of an ethylene copolymer including an ethylene/methacryl acid copolymer, there is disclosed the use of a mixed solvent of water and lower aliphatic amines as an aqueous dispersion medium without the use of ammonia (see, for example, Patent Document 4). The coating film obtained by drying the water dispersion liquid described in this document is a coating film of an ethylene/methacryl acid copolymer as in the case where an ethylene/methacryl acid copolymer is dispersed using ammonia, and therefore the coating film is expected to have a certain degree of water resistance.

Further, with respect to ammonia dispersion of an ethylene/methacryl acid copolymer, there is disclosed, for example, an aqueous dispersion composition obtained by neutralization and dispersion of an ethylene/methacryl acid copolymer using ammonia as a dispersant in an amount in the range within which high degree of neutralization is achieved (the number of moles of 120 to 140% based on a number of moles of carboxyl groups) (see, for example, Patent Document 5). Furthermore, there is disclosed an aqueous dispersion composition obtained by dispersing an ethylene/(meth)acrylic acid copolymer using lower aliphatic amines in an amount of 40 to 300 mol% based on the carboxyl groups (see, for example, Patent Document 6).

Furthermore, there is a document that describes obtaining an aqueous dispersion composition by charging 2.5 equivalents (based on a number of moles of carboxyl groups) triethylamine, 35% by mass of n-propanol, and distilled water, together with an ethylene/methacryl acid copolymer (see, for example, Patent Documents 7 to 8).

### PRIOR ART DOCUMENTS

### PATENT DOCUMENTS

Patent Document 1: Japanese Patent Application Laid-Open (JP-A) No. 54-61249
Patent Document 2: JP-A No. 2000-248141
Patent Document 3: JP-A No. 2000-198949
Patent Document 4: JP-A No. 2004-143293
Patent Document 5: Japanese Patent No. 4205807
Patent Document 6: Japanese Patent No. 3813567
Patent Document 7: JP-A No. 2009-91426
Patent Document 8: JP-A No. 2009-242504

### DISCLOSURE OF THE INVENTION

### PROBLEMS TO BE SOLVED BY THE INVENTION

When the amount of ammonia used (the degree of neutralization) is more than 100 mol% of a number of moles of carboxyl groups, dispersion tends to become possible. However, if the shear stress during dispersion is increased, for example, by increasing the stirring rate or if the cooling rate is relaxed, for example, by cooling by leaving to stand at room temperature after dispersion by stirring at an elevated temperature, it can result in a dispersion liquid with a high viscosity or increased residue. Thus, the performance as an aqueous dispersion liquid is insufficient. In addition, the ammonia-derived characteristic odor becomes stronger, which is problematic from the standpoint of improving the usage environment of an aqueous dispersion liquid.
The system disclosed in Patent Document 4, which does not use ammonia, does not have ammoniacal odor, but lower amines used in place of ammonia also have a characteristic odor. Therefore, there is a demand for an aqueous dispersion liquid of an ethylene/(meth)acrylic acid copolymer whose odor has been further reduced.

The present invention has been developed in view of the foregoing. Under the circumstances described above, there is a need for a process for producing an aqueous dispersion liquid, which process is able to produce an aqueous dispersion liquid that reduces usage problems such as odors which have conventionally been considered to be difficult, can be dispersed with a dispersant that can volatilize during coating film formation, and, at the same time, has excellent dispersibility, high uniformity of dispersed particles, and a low viscosity compared to conventional processes; for an aqueous dispersion liquid having a low viscosity and stable dispersibility; and for a layered body with excellent water resistance.

### MEANS FOR SOLVING THE PROBLEMS

The present invention has been achieved based on the obtained finding that, in neutralizing an acid group such as a carboxyl group in an ethylene/(meth)acrylic acid copolymer, using a predetermined low-odor alkanolamine as a dispersant in a predetermined amount stabilizes the dispersion.

The specific means for achieving the above-described problems is as follows.
<1> A process for producing an aqueous dispersion liquid, wherein, in an aqueous medium, an ethylene/(meth)acrylic acid copolymer (A) containing (meth)acrylic acid-derived constituent units in an amount of 8% by mass or more is neutralized by using an alkanolamine (B) and dispersed.

<2> In the process for producing an aqueous dispersion liquid of the present invention according to <1> above, the above-described alkanolamine (B) is preferably used in an amount of 40 mol% or more based on a number of moles of carboxyl groups in the above-described ethylene/(meth)acrylic acid copolymer (A).

<3> A process for producing an aqueous dispersion liquid, wherein, in an aqueous medium, an ethylene/(meth)acrylic acid copolymer (A) containing (meth)acrylic acid-derived constituent units in an amount of 8% by mass or more is neutralized by using an alkanolamine (B) and an ammonia (C) and dispersed.

<4> A process for producing an aqueous dispersion liquid, wherein, in an aqueous medium, an ethylene/(meth)acrylic acid copolymer (A) containing (meth)acrylic acid-derived constituent units in an amount of 8% by mass or more is neutralized by using an alkanolamine (B) or using an alkanolamine (B) and an ammonia (C), and is dispersed in the presence of a monohydric alcohol (D) having two or more carbon atoms, a percentage of which based on a total mass is 1 % by mass to 10% by mass.

<5> In the process for producing an aqueous dispersion liquid of the present invention according to <3> above or <4> above, the above-described alkanolamine (B) and the above-described ammonia (C) are preferably used in an amount of 40 mol% or more in total based on a number of moles of carboxyl groups in the above-described ethylene/(meth)acrylic acid copolymer (A).

<6> In the process for producing an aqueous dispersion liquid of the present invention according to <5> above, the above-described alkanolamine (B) is preferably used in an amount of 5 mol% or more based on a number of moles of carboxyl groups in the above-described ethylene/(meth)acrylic acid copolymer (A).

<7> In the process for producing an aqueous dispersion liquid according to any one of <3> above to <6> above, when a total mass of the above-described alkanolamine (B) is b, and a total mass of the above-described ammonia (C) is c, a ratio of b to c (b:c) is preferably from 1:99 to 99:1.

<8> In the process for producing an aqueous dispersion liquid according to any one of <1> above to <7> above, the above-described ethylene/(meth)acrylic acid copolymer (A) preferably has a melt flow rate (according to JIS K 7210-1999, at 190°C and a 2160 g load) of 10 to 1000 g/10 min.

<9> In the process for producing an aqueous dispersion liquid according to any one of <1> above to <8> above, the above-described alkanolamine (B) is preferably represented by general formula (1) below.

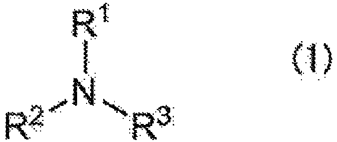

In general formula (1) above, R¹ to R³ represent independently of each other a hydrogen atom, an alkyl group, or a saturated aliphatic hydrocarbon group having one hydroxyl group, and at least one of R¹ to R³ represents a saturated aliphatic hydrocarbon group having one hydroxyl group.

<10> In the process for producing an aqueous dispersion liquid according to any one of <4> above to <9> above, the neutralization and dispersion are preferably carried out in the presence of the above-described monohydric alcohol (D) in an amount of 1% by mass to 10% by mass based on a combined mass of water, the ethylene/methacryl acid copolymer, the ammonia, and the monohydric alcohol.

<11> In the process for producing an aqueous dispersion liquid according to any one of <4> above to <10> above, the above-described monohydric alcohol (D) is preferably at least one selected from the group consisting of a saturated aliphatic alcohol and an alicyclic alcohol.

<12> In the process for producing an aqueous dispersion liquid according to any one of <1> above to <11> above, it is preferable to produce an aqueous dispersion liquid having a solid content concentration of the above-described ethylene/(meth)acrylic acid copolymer (A) of 5% by mass to 30% by mass based on a total mass of the aqueous dispersion liquid.

<13> An aqueous dispersion liquid produced by the process for producing an aqueous dispersion liquid according to any one of <1> above to <12> above.

<14> In the aqueous dispersion liquid according to <13> above, a viscosity of the aqueous dispersion liquid at 25°C is preferably 100 to 20,000 mPa·s.

<15> A layered body comprising a substrate and a film formed on the substrate using (for example, applying and drying) the aqueous dispersion liquid according to <13> above or <14> above.

### EFFECTS OF THE INVENTION

According to the present invention, a process for producing an aqueous dispersion liquid that has a reduced odor, can be dispersed with a dispersant that can volatilize during coating film formation, and, at the same time, has excellent dispersibility, high uniformity of dispersed particles, and a low viscosity compared to conventional processes using ammonia can be provided. In addition, an aqueous dispersion liquid having a low viscosity and stable dispersibility and a layered body with excellent water resistance can be provided.

### BEST MODE FOR CARRYING OUT THE INVENTION

The aqueous dispersion liquid of the present invention and the process for producing the same, and a layered body using the same will now be described in detail. Unless described with respect to a particular embodiment, for example, the first embodiment of the present invention or the second embodiment of the present invention, the description will be made as a matter common to the three embodiments from the first embodiment to the third embodiment.

The process for producing an aqueous dispersion liquid according to the first embodiment of the present invention is constituted such that, in an aqueous medium, an ethylene/(meth)acrylic acid copolymer (A) containing (meth)acrylic acid-derived constituent units in an amount of 8% by mass or more is neutralized by using an alkanolamine, (B) and dispersed.

The process for producing an aqueous dispersion liquid according to the second embodiment of the present invention is constituted such that, in an aqueous medium, an ethylene/(meth)acrylic acid copolymer (A) containing (meth)acrylic acid-derived constituent units in an amount of 8% by mass or more is neutralized by using an alkanolamine (B) and an ammonia (C) and dispersed.
Thus, the process for producing an aqueous dispersion liquid according to the second embodiment is constituted such that, in the constitution of the process for producing an aqueous dispersion liquid according to the first embodiment of the present invention, the ammonia (C) is additionally used as a basic compound.

The process for producing an aqueous dispersion liquid according to the third embodiment of the present invention is constituted such that, in an aqueous medium, an ethylene/(meth)acrylic acid copolymer (A) containing (meth)acrylic acid-derived constituent units in an amount of 8% by mass or more is neutralized by using an alkanolamine (B) alone or using an alkanolamine (B) and an ammonia (C) in combination and dispersed in the presence of a monohydric alcohol (D) having two or more carbon atoms in an amount of 1% by mass to 10% by mass based on a total mass of the aqueous dispersion liquid.
Thus, the process for producing an aqueous dispersion liquid according to the third embodiment of the present invention is constituted such that, in the constitution of the process for producing an aqueous dispersion liquid according to the first embodiment (the embodiment in which the alkanolamine (B) is used as a basic compound) or the second embodiment (the embodiment in which the alkanolamine (B) and the ammonia (C) are used in combination as a basic compound) of the present invention, the basic compound is used in the presence of the monohydric alcohol (D) having two or more carbon atoms in an amount of 1% by mass to 10% by mass based on a total mass of the aqueous dispersion liquid.

Therefore, the process for producing an aqueous dispersion liquid according to the first embodiment has a constitution common to the first, the second, and the third embodiment.
In the case of the constitution common to the first, the second, and the third embodiment, that is, the constitution such that, in dispersion of an ethylene/(meth)acrylic acid copolymer containing (meth)acrylic acid-derived constituent units in an amount of 8% by mass or more, neutralization is carried out with an alkanolamine, the dispersion during producing a water dispersion composition is stabilized. Consequently, dispersion of an ethylene/(meth)acrylic acid copolymer containing (meth)acrylic acid-derived constituent units in an amount of 8% by mass or more can be successfully carried out, and uniformity of dispersed particles can be improved. Further, the above-described constitution also reduces the degree of neutralization with the alkanolamine to a low level. This reduces the viscosity increase of an aqueous dispersion liquid, and an aqueous dispersion liquid having a low viscosity and stable dispersibility can be produced. In addition, the film formed by using this aqueous dispersion liquid has excellent water resistance. The first, the second, and the third embodiment of the present invention have such a common effect.
The degree of neutralization herein refers to the blend percentage (mol%) of a basic compound based on the number of moles of acid groups in an E(M)AA copolymer.

As in the process for producing an aqueous dispersion liquid according to the second embodiment of the present invention, in addition to the common effect described above, further, the volatility of a dispersant during coating film formation is improved by further using the ammonia (C) as a basic compound.
As in the process for producing an aqueous dispersion liquid according to the third embodiment of the present invention, in addition to the common effect described above, further, the degree of neutralization with the alkanolamine or the degree of neutralization with the alkanolamine and the ammonia can be reduced at a lower level by using a basic compound in the presence of the monohydric alcohol (D) having two or more carbon atoms in an amount of 1% by mass to 10% by mass based on a total mass of the aqueous dispersion liquid.

The aqueous dispersion liquid obtained by the process for producing an aqueous dispersion liquid of the present invention contains ethylene/(meth)acrylic acid copolymer (hereinafter also referred to as "E(M)AA copolymer") that contains at least constituent units derived from ethylene and constituent units derived from (meth)acrylic acid. The E(M)AA copolymer in the present invention is preferably a random copolymer of ethylene and acrylic acid or of ethylene and methacryl acid.

The E(M)AA copolymer in the present invention requires the presence of (meth)acrylic acid-derived constituent units. Requiring the presence of the constituent units means positively containing (meth)acrylic acid.
In the present invention, (meth)acrylic acid-derived constituent units in an amount of 8% by mass or more based on a total mass of the E(M)AA copolymer are contained.

When the content of the constituent units derived from (meth)acrylic acid is less than 8% by mass, it is difficult to produce an aqueous dispersion liquid with stable dispersibility, or the dispersion liquid is likely to have a high viscosity even if an aqueous dispersion liquid with stable dispersibility is produced. For making it easy to produce a practical dispersion liquid with a stable viscosity, the constituent units derived from (meth)acrylic acid is preferably 10% by mass or more, more preferably 15% by mass or more based on a total mass of the copolymer. When the copolymerization rate of (meth)acrylic acid is high, a stable aqueous dispersion liquid with less aggregation, more excellent dispersibility, and high uniformity of dispersed particles is readily obtained. Further, if the constituent units derived from (meth)acrylic acid is selected to be 18% by mass or more, a stable aqueous dispersion liquid with less aggregation, more excellent dispersibility, and high uniformity of dispersed particles is readily obtained even if the usages of the alkanolamine (B), the ammonia (C), and the monohydric alcohol (D) described below are small.
The upper limit of the content of the constituent units derived from (meth)acrylic acid is preferably, in terms of commercial availability, 30% by mass or less, more preferably 25% by mass or less based on a total mass of the E(M)AA copolymer.

The E(M)AA copolymer, which is a two-component random copolymer composed of ethylene-derived constituent units and (meth)acrylic acid-derived constituent units, may be composed to be a three- or more-component copolymer further having, in addition to these constituent units, constituent units derived from other monomers as long as the object of the present invention is not impaired. In this case, monomers of the third or later component may be randomly copolymerized or may be graft copolymerized.

Examples of the other monomers described above include, for example, vinyl esters such as vinyl acetate and vinyl propionate; unsaturated carboxylic acid esters such as methyl acrylate, ethyl acrylate, isobutyl acrylate, n-butyl acrylate, methyl methacrylate, isobutyl methacrylate, dimethyl maleate, and diethyl maleate; carbon monoxide; and the like.

The other monomers described above can be contained at a percentage of, for example, 20% by mass or less based on a total mass of the E(M)AA copolymer.

The melt flow rate (hereinafter also referred to as MFR for short) of the E(M)AA copolymer is preferably in the range of 10 to 1000 g/10 min. Further, the MFR is more preferably in the range of 20 to 600 g/10 min. The MFR is a value measured at 190°C and a load of 2160 g in accordance with JIS K 7210-1999. The same shall apply hereinafter.

The E(M)AA copolymer can be obtained by radical copolymerization at high temperature under high pressure. In the market, the E(M)AA copolymer is available under the trade name NUCREL (DU PONT-MITSUI POLYCHEMICALS CO., LTD.) and the trade name PRIMACOR (Dow Chemical Japan Ltd.).

The process for producing an aqueous dispersion liquid of the present invention provides a dispersion liquid by neutralizing a part or all of the carboxyl groups in the E(M)AA copolymer with a basic compound and dispersing the copolymer in water.
As the basic compound used in neutralization of a part or all of the carboxyl groups in the E(M)AA copolymer, the alkanolamine (B) is used in the process for producing an aqueous dispersion liquid according to the first embodiment of the present invention, as mentioned above. As the above-described basic compound, the alkanolamine (B) and the ammonia (C) are used in the process for producing an aqueous dispersion liquid according to the second embodiment of the present invention.
Further, in the process for producing an aqueous dispersion liquid according to the third embodiment of the present invention, neutralization is carried out using the alkanolamine (B) or the alkanolamine (B) and the ammonia (C) as a basic compound in the presence of a monohydric alcohol (D) having two or more carbon atoms in an amount of 1% by mass to 10% by mass based on a total mass of the aqueous dispersion liquid.

When neutralizing an E(M)AA copolymer in the process for producing an aqueous dispersion liquid according to the first embodiment of the present invention, for suppressing the viscosity increase, the degree of neutralization with alkanolamine is preferably 40 mol% or more, more preferably in the range of 40 mol% to 300 mol% based on the number of moles of acid groups, particularly carboxyl groups, of the E(M)AA copolymer.

In the process for producing an aqueous dispersion liquid according to the second embodiment of the present invention, the alkanolamine (B) and the ammonia (C) are used in combination as a basic compound. Also in the process for producing an aqueous dispersion liquid according to the third embodiment of the present invention, as a basic compound, the alkanolamine (B) may be used, and besides the alkanolamine (B) and the ammonia (C) may be used in combination. To improve the volatility of a dispersant during coating film formation, it is preferable to use the alkanolamine (B) and the ammonia (C) in combination.
In the case of neutralizing an E(M)AA copolymer with an alkanolamine and an ammonia, for suppressing the viscosity increase of an aqueous dispersion liquid, the degree of neutralization with the total of the alkanolamine and the ammonia is preferably 40 mol% or more, more preferably in the range of 40 mol% to 300 mol% based on a number of moles acid groups, particularly carboxyl groups, of a certain E(M)AA copolymer.
For suppressing the viscosity increase, a number of moles of the alkanolamine (B) is preferably 5 mol% or more, more preferably in the range of 5 to 300 mol% based on the number of moles of acid groups, particularly carboxyl groups, of a certain E(M)AA copolymer.

The degree of neutralization refers to the blend percentage (mol%) of a basic compound based on a number of moles of acid groups in an E(M)AA copolymer as mentioned above. Therefore, the amount of the degree of neutralization more than 100 mol% means that a basic compound of more than an equal number of moles of acid groups of the E(M)AA copolymer is blended. A blend percentage (mol%) of an alkanolamine based on a number of moles of acid groups in an E(M)AA copolymer is also referred to as "the degree of alkanolamine neutralization", and the blend percentage (mol%) of an ammonia based on a number of moles of acid groups in an E(M)AA copolymer is also referred to as "the degree of ammonia neutralization".

In the process for producing an aqueous dispersion liquid according to the first embodiment of the present invention, the dispersion stability of an aqueous dispersion liquid can be improved while suppressing the viscosity increase of a aqueous dispersion liquid by reducing the degree of alkanolamine neutralization, that is, the alkanolamine content based on acid groups of the E(M)AA copolymer to a low level. The degree of alkanolamine neutralization is more preferably 40 to 150 mol%.

In the process for producing an aqueous dispersion liquid according to the second embodiment and the third embodiment of the present invention, the dispersion stability of an aqueous dispersion liquid can be improved while suppressing the viscosity increase of the aqueous dispersion liquid by reducing the degree of neutralization with the alkanolamine and the ammonia, that is, the total amount of the alkanolamine and the ammonia based on the E(M)AA copolymer to a low level. The degree of neutralization with the total of the alkanolamine and the ammonia is more preferably 40 mol% to 150 mol%.

In the process for producing an aqueous dispersion liquid according to the third embodiment of the present invention, further, it is preferable to carry out neutralization and dispersion in the presence of the monohydric alcohol (D) in an amount of 1 to 10% by mass based on a combined mass of water, the E(M)AA copolymer (particularly EMAA copolymer), the ammonia, and the monohydric alcohol. When the amount of the monohydric alcohol (D) is not less than 1% by mass based on a combined mass described above, neutralization with the ammonia enhances the stability of dispersion, which in turn reduces the residue, whereby a dispersion state in which more uniform dispersion particles are dispersed can be obtained. When the amount of the alcohol is large, vapor of the alcohol and air are likely to evolve an explosive mixture gas, which requires various countermeasures from the standpoint of safety, but when not more than 10% by mass based on a combined mass described above, it is advantageous in that the countermeasures from the standpoint of safety can be reduced.
Among the above, further, it is more preferable to carry out neutralization and dispersion in the presence of a monohydric alcohol (D) in an amount of 1 to 5% by mass based on a combined mass of water, the E(M)AA copolymer, the ammonia, and the monohydric alcohol.

The alkanolamine used in dispersion of the E(M)AA copolymer is preferably represented by general formula (1) below.

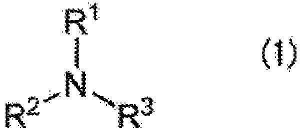

In general formula (1) above, R¹ to R³ represent independently of each other a hydrogen atom, an alkyl group, or a saturated aliphatic hydrocarbon group having one hydroxyl group, and at least one of R¹ to R³ represents a saturated aliphatic hydrocarbon group having one hydroxyl group.

The mixture form of the above-described alkanolamine and the E(M)AA copolymer is not particularly limited as long as neutralization and dispersion of the E(M)AA copolymer can be carried out in an aqueous medium containing the alkanolamine.

The above-described saturated aliphatic hydrocarbon group having one hydroxyl group is, in other words, a monovalent group obtained by removing one hydrogen atom from a saturated hydrocarbon moiety (CₙH₂ₙ₊₁) of a monovalent saturated aliphatic alcohol represented by CₙH₂ₙ₊₁OH.
As long as the saturated aliphatic alcohol is a monovalent alcohol, it may be any of a primary alcohol (for example, ethanol), a secondary alcohol (for example, isopropyl alcohol), or a tertiary alcohol (for example, tert-butyl alcohol).

The saturated aliphatic alcohol may be of linear structure, of branched structure, or of cyclic structure (alicyclic alcohol).
Examples of saturated aliphatic alcohols of linear structure include, for example, methanol, ethanol, 1-propanol, isopropyl alcohol (2-propanol), 1-butanol (n-butanol), 1-hexanol, 1-pentanol, and the like. Examples of saturated aliphatic alcohols of branched structure include, for example, tert-butyl alcohol, 2-methyl-1-hexyl alcohol, and the like. Examples of saturated aliphatic alcohols of cyclic structure include cyclohexanol and the like.

The carbon number of the saturated aliphatic alcohol is preferably 1 to 10.
In particular, in terms of performance, availability, and cost, a saturated aliphatic alcohol having 1 to 4 carbon atoms is preferred, and ethanol, for example, is preferably used in terms of availability or the like. Preferred examples of the above-described alicyclic alcohol include, for example, cyclopentanol, cyclohexanol, and the like.

Examples of the alkanolamine include, specifically, dimethylethanolamine [DMEA; (CH₃)₂NC₂H₄OH], diethylethanolamine [DEEA; (C₂H₅)₂NC₂H₄OH], ethanolamine [EA; NH₂C₂H₄OH], diethanolamine [DEA; NH(CH₂OH)₂], methyldiethanolamine [MDEA; CH₃N(C₂H₄OH)₂], butylethanolamine [BEA; C₄H₉NHCH₂OH], and the like.

In the process for producing an aqueous dispersion liquid according to the second embodiment and the third embodiment of the present invention, in the aspect in which the alkanolamine (B) and the ammonia (C) are used in combination as a basic compound, when a total mass of the alkanolamine (B) is b, and a total mass of the ammonia (C) is c, a mass ratio of the alkanolamine (B) to the ammonia (C) (b:c) is preferably from 1:99 to 99:1.
Further, from 3:97 to 97:3 is more preferred, and from 10:90 to 70:30 is most preferred.
Comparing to the case where the alkanolamine (B) is used alone, the use of the ammonia (C) in combination allows improving the volatility of a dispersant during coating film formation. In addition, a film formed by using this aqueous dispersion liquid having a reduced amount of the alkanolamine (B) has excellent water resistance.

In the process for producing an aqueous dispersion liquid according to the third embodiment of the present invention, the basic compound is used, during dispersion of the E(M)AA copolymer, in the presence of a monohydric alcohol (D) having two or more carbon atoms in an amount of 1% by mass to 10% by mass based on a total combined mass of the aqueous dispersion liquid as a dispersing agent in an aqueous medium to thereby effect neutralization. The presence of a monohydric alcohol (D) having two or more carbon atoms in an amount of 1% by mass to 10% by mass in an aqueous medium enhances the stability of dispersion, which in turn reduces the residue because of uniformized dispersed particles, whereby the viscosity increase as an aqueous dispersion liquid can be suppressed, which is advantageous. In cases where the amount of the monohydric alcohol (D) to be added is less than 1 % by mass, it is generally difficult to effect dispersion, and therefore the stability of dispersion cannot be enhanced even by neutralization with ammonia, causing a residue, whereby it is difficult to form a dispersion state in which uniform dispersion particles are dispersed. Further, the monohydric alcohol (D) is an inflammable liquid and, in addition to the standpoint of safety, brings out as an aqueous dispersion liquid the nature of the E(M)AA copolymer as much as possible, and therefore it is not preferred that the amount be more than 10% by mass based on the total combined mass described above.

The mixture form of the above-described monohydric alcohol (D) is not particularly limited as long as neutralization with the alkanolamine (B) alone or with the combined use of the ammonia (C) and dispersion can be carried out in an aqueous medium containing the monohydric alcohol (D). Specifically, the monohydric alcohol (D) may be preliminarily added into an aqueous medium before adding the alkanolamine (B) or the alkanolamine (B) and the ammonia (C) thereto, or the monohydric alcohol (D) and the alkanolamine (B), or the alkanolamine (B) and the ammonia (C) may be simultaneously added into an aqueous medium.

As the above-described monohydric alcohol (D), a monohydric alcohol having 2 to 10 carbon atoms is preferred. Examples of the monohydric alcohol (D) include, for example, those of structure having a cyclo ring(s) and those of structure having a branch(es) in addition to a linear alcohol. Further, the monohydric alcohol (D) may be any of a primary alcohol, a secondary alcohol, or a tertiary alcohol.

Examples of the above-described monohydric alcohol (D) include, for example, saturated aliphatic alcohols, alicyclic alcohols, and the like. Examples of the monohydric alcohol (D) include, for example, ethanol, 1-propanol, isopropanol, 1-butanol (n-butanol), 1-hexanol, 1-pentanol, cyclohexanol, and the like. In particular, in terms of performance, availability, and cost, a saturated aliphatic alcohol having 3 to 4 carbon atoms is preferred, and isopropanol or 1-butanol, for example, is preferably used in terms of availability or the like. Preferred examples of the above-described alicyclic alcohol include, for example, cyclopentanol, cyclohexanol, and the like.

The concentration of the E(M)AA copolymer in an aqueous dispersion liquid of the present invention (solid content concentration [by mass]) is preferably not more than 30% by mass based on a total mass of the aqueous dispersion liquid. When a solid content concentration is not more than 30% by mass, an aqueous dispersion liquid with good dispersibility can be obtained, and the aqueous dispersion liquid is likely to provide anticorrosive paint with excellent uniformity of the coating film, for example, when used as anticorrosive paint for steel materials. In particular, a solid content concentration is preferably 5% by mass to 30% by mass and more preferably 15% by mass to 25% by mass.

In a solid content concentration of the E(M)AA copolymer, a viscosity (25°C) of the aqueous dispersion liquid of the present invention, although it is adjusted as appropriate depending on the intended range such as coating properties or handleability, is preferably in the range of 100 mPa·s to 20,000 mPa·s and more preferably in the range of 100 mPa·s to 2,000 mPa·s.
A viscosity of the aqueous dispersion liquid is measured using a Brookfield Viscometer (available from Brookfield) with the aqueous dispersion liquid being adjusted to 25°C.

An aqueous dispersion liquid of the present invention can be stably prepared as described below.
Specifically, using an E(M)AA copolymer and a basic compound [an alkanolamine (B) alone, or an alkanolamine (B) and an ammonia (C)] (in the third embodiment of the present invention, further, the basic compound is used in the presence of a monohydric alcohol (D) having two or more carbon atoms in an amount of 1% by mass to 10% by mass based on a total mass of the aqueous dispersion liquid), a dispersion treatment is carried out, for example, by stirring in an aqueous medium such as water with a shearing force applied to obtain an aqueous dispersion composition (an aqueous dispersion liquid). In this process, the dispersion treatment is preferably carried out with the temperature of a dispersed material increased to 90°C or more. For improving dispersion rate and enhancing productivity, it is also possible to carry out, for example, a dispersion treatment at a high temperature such as 130°C to 160°C or a dispersion treatment with a high shearing force such as a high-speed stirring rate.

Examples of the preferred aspects include the production methods as described below.
In the first embodiment of the present invention, (1) water, (2) an E(M)AA copolymer, and (3) an alkanolamine are placed in a reactor to which a shearing force can be applied. Then, all the components from (1) to (3) are reacted at a predetermined temperature with a shearing force applied, whereby an aqueous dispersion liquid can be obtained.
The amount of (2) the E(M)AA copolymer described above is preferably such an amount that a solid content concentration is 5% by mass to 30% by mass. The amount of (3) the alkanolamine described above is preferably the amount necessary to give the above-mentioned solid content concentration based on carboxyl groups in (2) the E(M)AA copolymer. More preferred is 40 mol% to 300 mol% of the total number of moles of carboxyl groups.
The reaction time, although depending on reaction temperature and other reaction conditions, is about 10 minutes to 120 minutes.

In the second embodiment of the present invention, (1) water, (2) an E(M)AA copolymer, (3) an alkanolamine, and (4) an aqueous ammonia solution are placed in a reactor to which a shearing force can be applied. Then, all the components from (1) to (4) are reacted at a predetermined temperature with a shearing force applied, whereby an aqueous dispersion liquid can be obtained.
The amount of (2) the E(M)AA copolymer described above is preferably such an amount that a solid content concentration is 5% by mass to 30% by mass. The amount of (3) the alkanolamine and (4) the aqueous ammonia solution described above is preferably the amount necessary to give the above-mentioned solid content concentration based on carboxyl groups in (2) the E(M)AA copolymer. More preferably, a degree of neutralization with a total of the alkanolamine and the ammonia is 40 mol% to 300 mol% of the total number of moles of carboxyl groups.

In the third embodiment of the present invention, (1) water, (2) an E(M)AA copolymer, (3) an alkanolamine, (4) an aqueous ammonia solution, and (5) a monohydric alcohol (D) having two or more carbon atoms are placed in a reactor to which a shearing force can be applied. Then, all the components from (1) to (5) are reacted at a predetermined temperature with a shearing force applied, whereby an aqueous dispersion liquid can be obtained.
The amount of (2) the E(M)AA copolymer described above is preferably such an amount that is 5% by mass to 30% by mass of the total solid content concentration. The amount of (3) the alkanolamine and (4) the aqueous ammonia solution described above is preferably the amount necessary to give the above-mentioned solid content concentration based on carboxyl groups in (2) the E(M)AA copolymer. More preferred degree of neutralization is such that the total number of moles of the alkanolamine and the ammonia is 40 mol% or more of the total number of moles of carboxyl groups and more preferably 40 mol% to 300 mol%.

In the process for producing an aqueous dispersion liquid according to the first embodiment, the second embodiment, and the third embodiment of the present invention, examples of the reactor to which a shearing force can be applied include, for example, an autoclave equipped with a stirrer. The reaction time, although depending on reaction temperature and other reaction conditions, is about 10 minutes to 120 minutes in any of the embodiments.

An aqueous dispersion liquid produced by the process for producing an aqueous dispersion liquid according to the first embodiment, the second embodiment, and the third embodiment of the present invention is highly stable and shows little change in dispersed particle size and viscosity even after long-term storage.

In the process for producing an aqueous dispersion liquid according to the first embodiment, the second embodiment, and the third embodiment of the present invention, by carrying out the neutralization of an E(M)AA copolymer using at least an alkanolamine, dispersion of the E(M)AA copolymer is stabilized when producing a water dispersion composition. Therefore, polyvalent metal ions may be introduced into an aqueous dispersion liquid of the present invention in an amount of 1 mol% or more based on the (meth)acrylic acid.
Examples of the method of introducing polyvalent metal ions into an aqueous dispersion liquid of the present invention include the addition of metal oxides, metal hydroxides, or the like together with an E(M)AA copolymer and an alkanolamine during preparation of an aqueous dispersion liquid. Instead of an ethylene/(meth)acrylic acid copolymer, an ethylene/(meth)acrylic acid ionomer having polyvalent metal ions in an amount of 1 mol% or more based on a total amount of constituent units derived from (meth)acrylic acid may be introduced into an aqueous dispersion liquid.
Into an aqueous dispersion liquid, an ethylene/(meth)acrylic acid copolymer and an ethylene/(meth)acrylic acid ionomer having polyvalent metal ions in an amount of 1 mol% or more based on the (meth)acrylic acid may be introduced in combination, and any introduction method may be employed.

According to the process for producing an aqueous dispersion liquid of the present invention, the aqueous dispersion liquid can be prepared by blending the above-mentioned E(M)AA copolymer, alkanolamine, further ammonia in the second embodiment and the third embodiment of the present invention, further monohydric alcohol having two or more carbon atoms in the third embodiment of the present invention, and water, and besides various additives as required.
Examples of such additives include polyhydric alcohols such as glycerin, ethylene glycol, polyethylene glycol, and polypropylene glycol; water-soluble epoxy compounds; lower alcohols such as methanol, ethanol, isopropyl alcohol, and n-propyl alcohol; ethers such as ethylene glycol monomethyl ether, ethylene glycol monoethyl ether, propylene glycol monomethyl ether, propylene glycol diethyl ether, diethylene glycol monoethyl ether, and dipropylene glycol monomethyl ether; esters such as ethylene glycol monoacetate and propylene glycol monoacetate; and antioxidants, weathering stabilizers, UV absorbers, light stabilizers, antistatic agents, plasticizers, pigments, dyes, antibacterial agents, lubricants, antiblocking agents, anticorrosive agents, adhesives, cross-linking agents, writability-improving agents, inorganic fillers, foaming agents, and the like.

As long as the effects of the present invention are impaired, an aqueous dispersion liquid of the present invention may contain at any rate any other aqueous dispersion liquid containing a polymer other than the E(M)AA copolymer. When the other aqueous dispersion liquid is contained, an aqueous dispersion liquid of the present invention can be modified, and, by contraries, the other aqueous dispersion liquid can also be modified.
In this case, when a solid content of an aqueous dispersion liquid of the present invention is "a" and the solid content of the other aqueous dispersion liquid containing a polymer other than the E(M)AA copolymer is "b", a solid content ratio (a/b; mass ratio) is generally from 10/90 to 90/10, and, in particular, the ratio from 20/80 to 80/20 is preferred.

As the other aqueous dispersion liquid containing a polymer other than the E(M)AA copolymer, it is desirable to select an aqueous dispersion liquid having a pH of 7 or more or an aqueous dispersion liquid whose pH has been adjusted to 7 or more, for example, with aqueous ammonia, which aqueous dispersion liquid does not gel when mixed with an aqueous dispersion liquid of the present invention. Further, as the other aqueous dispersion liquid containing a polymer other than the E(M)AA copolymer, it is desirable to select an aqueous dispersion liquid having an average dispersed particle size of 1 nm to 10,000 nm, preferably 5 nm to 5,000 nm, and a solid content concentration of 2% by mass to 60% by mass, particularly 5% by mass to 50% by mass.

Examples of the other aqueous dispersion liquid containing a polymer other than the E(M)AA copolymer include aqueous dispersion liquids, for example, of ethylene/acrylic acid copolymer, polyvinyl acetate, ethylene/vinyl acetate copolymer, polyvinyl chloride, polyvinylidene chloride, water-soluble acrylic resin, acrylamide resin, methacrylamide resin , acryl nitrile resin, methacrylonitrile resin, styrene/acrylic acid copolymer, water-soluble polyurethane resin, water-soluble styrene/maleic acid copolymer, styrene/butadiene copolymer, high-impact polystyrene resin, butadiene resin, polyester resin, acrylonitrile/butadiene copolymer, polyethylene resin, polyethylene oxide resin, polypropylene/ethylene copolymer, maleic anhydride graft polyolefins such as maleic anhydride graft-polypropylene-ethylene copolymer, chlorinated polyethylene, chlorinated polypropylene, EPDM (ethylene-propylene-diene copolymer), phenol resin, silicone resin, and epoxy resin.
These may be used alone, or two or more of them may be used in combination.

Further, in blending, two or more of the other aqueous dispersion liquids containing a polymer other than the E(M)AA copolymer may be used. The preparation of a mixed dispersion obtained by blending an aqueous dispersion liquid of the present invention and the other aqueous dispersion liquid can be achieved by mixing plural dispersions to be blended at room temperature with stirring. This mixed dispersion can be used similarly to an aqueous dispersion liquid of the present invention. In the preparation of the mixed dispersion, the base resin of an aqueous dispersion liquid of the present invention [E(M)AA copolymer] and the base resin contained in the other aqueous dispersion liquid to be blended may be preliminarily melt blended or dry blended before dispersion in water. The present invention is not limited to such a preparation process.

An aqueous dispersion liquid of the present invention or the mixed dispersion of this aqueous dispersion liquid with the other aqueous dispersion liquid can be provided on any substrate, for example, by application to form a film, whereby a layered body comprising a substrate and a film formed by using an aqueous dispersion liquid of the present invention can be formed.
The layered body of the present invention can be produced, for example, by applying an aqueous dispersion liquid of the present invention or the mixed dispersion of this aqueous dispersion liquid with the other aqueous dispersion liquid on a substrate and drying.

Examples of the above-described substrate include, for example, moldings such as a sheet or a film formed using various polymers such as high-density, medium-density, or low-density polyethylene, an ethylene/α-olefin copolymer, an ethylene/vinyl acetate copolymer, an ethylene/(meth)acrylic acid ester copolymer, an ethylene/(meth)acrylic acid copolymer or ionomers thereof, an ethylene/(meth)acrylic acid (meth)acrylic acid ester copolymer or ionomers thereof, olefin copolymers such as polypropylene, poly-1-butene, and poly-4-methyl-1-pentene, styrene resins such as polystyrene, an ABS resin, and a styrene/butadiene block copolymer, polyesters such as polyethylene terephthalate, polyamides such as nylon 6 and nylon 66, polyvinyl chloride, and blends thereof at any ratio; metals such as iron, copper, aluminum, and stainless; natural materials such as wood and paper; natural or synthetic leathers; or fibers or fabrics such as nylon, polyester, acryl, urethane, and rayon.

Examples of applicable methods for forming on a substrate a coating film composed of an aqueous dispersion liquid of the present invention include known methods, for example, coating methods such as roll coating, bar coating, air knife coating, reverse roll coating, doctor coating, brush coating, and spray coating; printing methods such as screen printing, gravure printing, engraved roll printing, and flexographic printing; and the method of immersing a substrate in an aqueous dispersion liquid of the present invention.

After the coating film composed of the aqueous dispersion liquid has been formed on a substrate, for example, by application, water may be evaporated by natural drying in the air or compulsory drying by heating to thereby obtain a more uniform film. In drying by heating, a layered body in which a coating film with a desired thickness is formed can be obtained by evaporating volatile components such as water and alkanolamines by drying by heating at a temperature of about 80°C to 200°C.

The thickness of the film obtained by drying the film after being formed, for example, by application is optionally, but generally from 1 µm to 20 µm, and preferably from 1 µm to 10 µm. When the thickness is within the above range, volume reduction, for example, in packaging materials can be achieved, and low temperature heat-sealability can be obtained. Further, an anticorrosive film can be formed.
The film formed may be subjected to a cross-linking treatment with electron beam irradiation for the purpose of enhancing water resistance, durability, and the like.

An aqueous dispersion liquid of the present invention can be utilized as anticorrosive paint or a material for anticorrosive paint. In addition, an aqueous dispersion liquid of the present invention can be utilized for producing a heat-sealable layered body obtained by applying this aqueous dispersion liquid on a substrate and drying.

A form of the substrate may be any molded body such as a film, a sheet, or a container.
Examples of materials for a substrate include polyolefins; olefin polymers such as ethylene/polar monomer copolymers such as an ethylene/vinyl acetate copolymer, an ethylene/(meth)acrylic acid ester copolymer, an ethylene/(meth)acrylic acid copolymer or ionomers thereof, and an ethylene/(meth)acrylic acid/(meth)acrylic acid ester copolymer or ionomers thereof; polyesters; polyamides; polycarbonates; polyvinyl chloride; polystyrene; ABS resins; styrene polymers such as a styrene/butadiene block copolymer; vinyl alcohol polymers such as polyvinyl alcohol and an ethylene/vinyl alcohol copolymer; any blend material thereof; metal; wood; paper; fiber products; leather; and the like.

Examples of the above-described polyolefins include homopolymers, for example, of ethylene, propylene, 1-butene, 1-hexene, 1-octene, 1-decene, 1-dodecene, and 4-methyl-1-pentene or copolymers of these olefins. Specific examples include various polyethylenes, polypropylene, and poly-4-methyl-1-pentene. Examples of polyethylenes include high-density polyethylene, medium-density polyethylene, high-pressure-process low-density polyethylene, and linear low-density polyethylene (ethylene/α-olefin copolymer). Examples of the α-olefin in linear low-density polyethylene include, for example, propylene, 1-butene, 1-pentene, 1-hexene, 1-octene, 1-decene, 1-dodecene, and 4-methyl-1-pentene. The linear low-density polyethylene may be produced by any catalyst system, and those obtained by copolymerization in the presence of, for example, a single-site catalyst or a multi-site catalyst can be used.

Examples of the polyester that can be used as a substrate include, for example, polyethylene terephthalate, polytrimethylene terephthalate, polytetramethylene terephthalate, and polyethylene-2,6-naphthalenedicarboxylate. Examples of polyamides include those obtained by, for example, polycondensation of dicarboxylic acids with diamines, ring-opening polymerization of lactams, polycondensation of amino carboxylic acids, or copolymerization of the lactams, dicarboxylic acids, and diamines described above, and those which are commercially available, for example, as nylon 4, nylon 6, nylon 46, nylon 66, nylon 612, nylon 6T, nylon 11, nylon 12, nylon 6/66, nylon 6/12, nylon 6/610, nylon 66/12, nylon 6/66/610, and MX-Nylon can be used. Nylon 6 and nylon 66 are particularly suitable as the polyamide.

In the above-described heat-sealable layered body, a film substrate or a metal substrate is preferred as the above-described substrate from the standpoint of use as a packaging material or use as a material for metal anticorrosion such as anticorrosive paint. As a film substrate, those having, for example, a thickness of about 10 µm to 300 µm are suitable, and, particularly in the case where volume reduction is intended, a film having a thickness of about 10 µm to 100 µm is preferred.
Specifically, for example, those having excellent functionality such as gas barrier properties, moisture barrier properties, heat resistance, transparency, toughness, abrasion resistance, and the like are preferred. Examples thereof include stretched or unstretched films made of a polar material or a non-polar material. A film substrate may be a layered body film having a monolayer structure or a two or more layer structure. This layered body film may be one having an adhesive layer as an intermediate layer. Specific examples include, for example, unstretched films, uniaxially-stretched films, or biaxially-stretched films of, for example, polyester, polyamide, and ethylene-vinyl alcohol copolymer; polyolefin stretched films such as a biaxially-stretched film of polypropylene and a uniaxially-stretched film of high-density polyethylene; polyolefin unstretched films of, for example, poly-4-methylpentene, polypropylene, and polyethylene; metal-deposited or inorganic oxide-deposited films obtained, for example, by aluminum deposition, silica deposition, or alumina deposition on the above-described each film; aluminum foil; paper; natural fibers; woven fabric composed of semi-synthetic fiber or natural fiber; nonwoven fabric; natural leather; or synthetic leather.

When utilized as anticorrosive paint or a material for anticorrosive paint, an anticorrosive metal substrate is obtained. In this case, as a metal material constituting the metal substrate, plates having a thickness of, for example, from 500 µm to 5,000 µm, especially from 1,000 µm to 2,000 µm are suitable. However, those having a thickness outside this range can also be used.

Examples of the metal-deposited or inorganic oxide-deposited films described above include those obtained by depositing a metal such as aluminum or an inorganic oxide such as silica, alumina, magnesia, or titanium oxide on a stretched or unstretched film of, for example, polyester, polyamide, polyvinyl alcohol, ethylene-vinyl alcohol copolymer, polycarbonate, or polyolefin, for example, by vacuum deposition, chemical plating, or sputtering. The deposition thickness is preferably, for example, from about 50 Angstrom to 2,000 Angstrom.

In the case where a film substrate is a layered body film, a layered body film that contains at least one layer of the film exemplified above is preferred. In the case where a layered body film contains an adhesive layer, an ethylene/unsaturated carboxylic acid copolymer, an ethylene/vinyl acetate copolymer, an ethylene/unsaturated carboxylic acid ester copolymer, an unsaturated carboxylic acid-modified polyolefin, or the like can be used as an adhesive layer.

A substrate may be subjected to a corona treatment for the purpose of improving, for example, adhesiveness or may be subjected to a primer treatment in advance. In particular, in the case where a resin film is used as a substrate, it is preferred that the substrate be subjected to a primer treatment.

### EXAMPLES

The present invention will now be described more specifically by way of examples, but the present invention is by no means limited to the following examples unless beyond the spirit of the invention. "Ethylene content" means the copolymerization rate of ethylene-derived repeating constituent units, and "(meth)acrylic acid content" means the copolymerization rate of (meth)acrylic acid-derived repeating constituent units. MFR represents the melt flow rate value measured at 190°C and a load of 2160 g in accordance with JIS K 7210-1999.

### <The first embodiment of the present invention>

### (Example 101)

To a 300-ml autoclave, 64 g of an ethylene/methacryl acid copolymer (ethylene content: 80% by mass, methacryl acid content: 20% by mass, MFR = 60 g/10 min), 243 g of ion exchanged water, and 13.1 g of diethylethanolamine were added, and the resulting mixture was stirred at a temperature of 150°C and a stirring rate of 1200 rpm for 1 hour. A degree of alkanolamine neutralization (the percentage of alkanolamine based on a number of moles of carboxyl groups in an ethylene/methacryl acid copolymer) was 75 mol%. Thereafter, the mixture was slowly cooled with tap water at a cooling rate of 1°C/min to 3 °C/min to obtain an aqueous dispersion liquid. A solid content concentration of the aqueous dispersion liquid obtained was 20% by mass.

Then, the aqueous dispersion liquid obtained was evaluated as described below. The results of the measurement evaluation are shown in Table 1 below.

### [1] Dispersibility

The aqueous dispersion liquid obtained was visually observed and evaluated according to the evaluation criteria below.

### <Evaluation criteria>

A: Uniformly dispersed
B: Separated

### [2] Stability (Storage stability)

The aqueous dispersion liquid obtained was left to stand in the atmosphere at 23°C for 1 week, and the aqueous dispersion liquid after leaving to stand was visually observed and evaluated according to the evaluation criteria below.

### <Evaluation criteria>

A: Uniformly dispersed
B: Separated

### [3] Viscosity

The viscosity at 25°C of the aqueous dispersion liquid obtained was measured using a Brookfield. Viscometer (available from Brookfield).

### [4] Transparency

The hue of the aqueous dispersion liquid obtained was visually observed, and besides the light transmittance at 546 nm was measured using a UV spectrophotometer [manufactured by Shimadzu Corporation].

### [5] Particle size

The aqueous dispersion liquid obtained was 5-fold diluted with ion exchanged water, and the particle size in volume average (volume average diameter; nm) was measured using a dynamic light-scattering particle size distribution analyzer LB-500 [manufactured by HORIBA, Ltd.].

### [6] pH

The aqueous dispersion liquid obtained was adjusted to 25°C, and the pH at 25°C was measured using a pH meter [manufactured by HORIBA, Ltd.].

### (Example 102)

An aqueous dispersion liquid was obtained in the same manner as in Example 101 except that the amount of diethylethanolamine was varied from 13.1 g to 10.5 g, the amount of ion exchanged water from 243 g to 246 g, and a degree of neutralization was 60 mol%, and evaluations were performed. The evaluation results are shown in Table 1 below.

### (Example 103)

An aqueous dispersion liquid was obtained in the same manner as in Example 101 except that 64 g of an ethylene/methacryl acid copolymer (ethylene content: 80% by mass, methacryl acid content: 20% by mass, MFR = 60 g/10 min) was replaced with 64 g of an ethylene/methacryl acid copolymer (ethylene content: 80% by mass, methacryl acid content: 20% by mass, MFR = 500 g/10 min), the amount of diethylethanolamine was varied from 13.1 g to 8.7 g, the amount of ion exchanged water from 243 g to 247 g, and a degree of neutralization was 50 mol%, and evaluations were performed. The evaluation results are shown in Table 1 below.

### (Example 104)

An aqueous dispersion liquid was obtained in the same manner as in Example 101 except that 64 g of an ethylene/methacryl acid copolymer (ethylene content: 80% by mass, methacryl acid content: 20% by mass, MFR = 60 g/10 min) was replaced with 64 g of an ethylene/methacryl acid copolymer (ethylene content: 85% by mass, methacryl acid content: 15% by mass, MFR = 60 g/10 min), the amount of diethylethanolamine was varied from 13.1 g to 10.5 g, the amount of ion exchanged water from 243 g to 246 g, and a degree of neutralization was 80 mol%, and evaluations were performed. The evaluation results are shown in Table 1 below.

### (Example 105)

An aqueous dispersion liquid was obtained in the same manner as in Example 101 except that 64 g of an ethylene/methacryl acid copolymer (ethylene content: 80% by mass, methacryl acid content: 20% by mass, MFR = 60 g/10 min) was replaced with 64 g of an ethylene/methacryl acid copolymer (ethylene content: 89% by mass, methacryl acid content: 11% by mass, MFR = 100 g/10 min), the amount of diethylethanolamine was varied from 13.1 g to 14.4 g, the amount of ion exchanged water from 243 g to 242 g, and a degree of neutralization was 150 mol%, and evaluations were performed. The evaluation results are shown in Table 1 below.

### (Example 106)

An aqueous dispersion liquid was obtained in the same manner as in Example 101 except that 64 g of an ethylene/methacryl acid copolymer (ethylene content: 80% by mass, methacryl acid content: 20% by mass, MFR = 60 g/10 min) was replaced with 64 g of an ethylene/methacryl acid copolymer (ethylene content: 80% by mass, methacryl acid content: 20% by mass, MFR = 500 g/10 min), 13.1 g of diethylethanolamine with 6.4 g of ethanolamine, ion exchanged water was varied from 243 g to 250 g, and a degree of neutralization was 70 mol%, and evaluations were performed. The evaluation results are shown in Table 1 below.

### (Example 107)

An aqueous dispersion liquid was obtained in the same manner as in Example 101 except that 64 g of an ethylene/methacryl acid copolymer (ethylene content: 80% by mass, methacryl acid content: 20% by mass, MFR = 60 g/10 min) was replaced with 64 g an ethylene/acrylic acid copolymer (ethylene content: 80% by mass, acrylic acid content: 20% by mass, MFR = 300 g/10 min), the amount of diethylethanolamine was varied from 13.1 g to 14.6 g, the amount of ion exchanged water from 243 g to 241 g, and a degree of neutralization was 70 mol%, and evaluations were performed. The evaluation results are shown in Table 1 below.

### (Example 108)

An aqueous dispersion liquid was obtained in the same manner as in Example 101 except that 64 g of an ethylene/methacryl acid copolymer (ethylene content: 80% by mass, methacryl acid content: 20% by mass, MFR = 60 g/10 min) was replaced with 64 g an ethylene/acrylic acid copolymer (ethylene content: 80% by mass, acrylic acid content: 20% by mass, MFR = 300 g/10 min), 13.1 g of diethylethanolamine with 7.6 g of ethanolamine, the amount of ion exchanged water was varied from 243 g to 248 g, and a degree of neutralization was 70 mol%, and evaluations were performed. The evaluation results are shown in Table 1 below.

### (Example 109)

An aqueous dispersion liquid was obtained in the same manner as in Example 101 except that 64 g of an ethylene/methacryl acid copolymer (ethylene content: 80% by mass, methacryl acid content: 20% by mass, MFR = 60 g/10 min) was replaced with 64 g an ethylene/acrylic acid copolymer (ethylene content: 80% by mass, acrylic acid content: 20% by mass, MFR = 300 g/10 min), 13.1 g of diethylethanolamine with 13.1 g of diethanolamine, and a degree of neutralization was 70 mol%, and evaluations were performed. The evaluation results are shown in Table 1 below.

### (Example 110)

An aqueous dispersion liquid was obtained in the same manner as in Example 101 except that 64 g of an ethylene/methacryl acid copolymer (ethylene content: 80% by mass, methacryl acid content: 20% by mass, MFR = 60 g/10 min) was replaced with 64 g an ethylene/acrylic acid copolymer (ethylene content: 80% by mass, acrylic acid content: 20% by mass, MFR = 300 g/10 min), 13.1 g of diethylethanolamine with 14.8 g of methyldiethanolamine, the amount of ion exchanged water was varied from 243 g to 241 g, and a degree of neutralization was 70 mol%, and evaluations were performed. The evaluation results are shown in Table 1 below.

### (Example 111)

An aqueous dispersion liquid was obtained in the same manner as in Example 101 except that 64 g of an ethylene/methacryl acid copolymer (ethylene content: 80% by mass, methacryl acid content: 20% by mass, MFR = 60 g/10 min) was replaced with 64 g an ethylene/acrylic acid copolymer (ethylene content: 80% by mass, acrylic acid content: 20% by mass, MFR = 300 g/10 min), 13.1 g of diethylethanolamine with 14.6 g of butylethanolamine, the amount of ion exchanged water was varied from 243 g to 241 g, and a degree of neutralization was 70 mol%, and evaluations were performed. The evaluation results are shown in Table 1 below.

### (Example 112)

An aqueous dispersion liquid was obtained in the same manner as in Example 101 except that 13.1 g of diethylethanolamine was replaced with 10.0 g of dimethylethanolamine, the amount of ion exchanged water was varied from 243 g to 246 g, and a degree of neutralization was 75 mol%, and evaluations were performed. The evaluation results are shown in Table 1 below.

### (Comparative Example 101)

The same procedure was carried out as in Example 101 except that 64 g of an ethylene/methacryl acid copolymer (ethylene content: 80% by mass, methacryl acid content: 20% by mass, MFR = 60 g/10 min) was replaced with 32 g of an ethylene/methacryl acid copolymer (ethylene content: 96% by mass, methacryl acid content: 4% by mass, MFR = 7 g/10 min), the amount of diethylethanolamine was varied from 13.1 g to 2.6 g, the amount of ion exchanged water from 243 g to 285 g, and a degree of neutralization was 150 mol%, but the ethylene/methacryl acid copolymer (ethylene content: 96% by mass, methacryl acid content: 4% by mass, MFR = 7 g/10 min) was not dispersed in water and precipitated in a lump. The evaluation results are shown in Table 1 below.

### (Comparative Example 102)

An aqueous dispersion liquid was obtained in the same manner as in Example 101 except that 64 g of an ethylene/methacryl acid copolymer (ethylene content: 80% by mass, methacryl acid content: 20% by mass, MFR = 60 g/10 min) was replaced with 80 g of an ethylene/methacryl acid copolymer (ethylene content: 80% by mass, methacryl acid content: 20% by mass, MFR = 500 g/10 min), 13.1 g of diethylethanolamine with 8.2 g of a 29% aqueous ammonia solution, the amount of ion exchanged water was varied from 243 g to 232 g, and a degree of neutralization was 75 mol%, and evaluations were performed. The evaluation results are shown in Table 1 below.

### (Comparative Example 103)

An aqueous dispersion liquid was obtained in the same manner as in Example 101 except that 64 g of an ethylene/methacryl acid copolymer (ethylene content: 80% by mass, methacryl acid content: 20% by mass, MFR = 60 g/10 min) was replaced with 80 g of an ethylene/methacryl acid copolymer (ethylene content: 80% by mass, methacryl acid content: 20% by mass, MFR = 60 g/10 min), 13.1 g of diethylethanolamine with 8.2 g of a 29% aqueous ammonia solution, the amount of ion exchanged water was varied from 243 g to 232 g, and a degree of neutralization was 75 mol%, and evaluations were performed. The evaluation results are shown in Table 1 below.

The meanings of the abbreviations described in Table 1 are as follows:
- EMAA: Ethylene-methacryl acid copolymer
- EAA: Ethylene/acrylic acid copolymer
- MAA: Methacryl acid
- AA: Acrylic acid
- DMEA: Dimethylethanolamine
- DEEA: Diethylethanolamine
- EA: Ethanolamine
- DEA: Diethanolamine
- MDEA: Methyldiethanolamine
- BEA: Butylethanolamine

"Content" in the section "(Meth)acrylic acid" shown in Table 1 represents the content of (meth)acrylic acid-derived constituent units [% by mass] based on a total mass of an ethylene/(meth)acrylic acid copolymer.

**[Table 1]**

| | (A) Copolymer | | | | Solid content concentration | (B) Alkanolamine | | Dispersibility | Stability | Viscosity (mPa·s) | Particle size (nm) | Transparency (%) | pH |
|---|---|---|---|---|---|---|---|---|---|---|---|---|---|
| | Type | MFR | (Meth)acrylic acid | | | Type | Degree of neutralization (mol%) | | | | | | |
| | | | Type | Content | | | | | | | | | |
| Ex. 101 | EMAA | 60 | MAA | 20 mass% | 20 mass% | DEEA | 75 | A | A | 190 | 50 or less | 48 | 10 |
| Ex. 102 | EMAA | 60 | MAA | 20 mass% | 20 mass% | DEEA | 60 | A | A | 430 | 144 | 10 | 10 |
| Ex. 103 | EMAA | 500 | MAA | 20 mass% | 20 mass% | DEEA | 50 | A | A | 150 | 77 | 0.2 | 9 |
| Ex. 104 | EMAA | 60 | MAA | 15 mass% | 20 mass% | DEEA | 80 | A | A | 16200 | 87 | 0.2 | 10 |
| Ex. 105 | EMAA | 100 | MAA | 11 mass% | 20 mass% | DEEA | 150 | A | A | 100000 | 86 | 0.1 | 11 |
| Ex. 106 | EMAA | 500 | MAA | 20 mass% | 20 mass% | EA | 70 | A | A | 3900 | 65 | 18 | 10 |
| Ex. 107 | EAA | 300 | AA | 20 mass% | 20 mass% | DEEA | 70 | A | A | 75 | 50 or less | 71 | 9 |
| Ex. 108 | EAA | 300 | AA | 20 mass% | 20 mass% | EA | 70 | A | A | 90 | 50 or less | 19 | 9 |
| Ex. 109 | EAA | 300 | AA | 20 mass% | 20 mass% | DEA | 70 | A | A | 160 | 50 or less | 73 | 9 |
| Ex. 110 | EAA | 300 | AA | 20 mass% | 20 mass% | MDEA | 70 | A | A | 85 | 50 or less | 45 | 9 |
| Ex.111 | EAA | 300 | AA | 20 mass% | 20 mass% | BEA | 70 | A | A | 105 | 186 | less than 0.1 | 9 |
| Ex. 112 | EMAA | 60 | MAA | 20 mass% | 20 mass% | DMEA | 75 | A | A | 220 | 50 or less | 33 | 10 |
| Comp. Ex. 101 | EMAA | 7 | MAA | 4 mass% | 10 mass% | DEEA | 150 | B | B | unevalua ble | uneval uable | unevalu able | unevalu able |
| Comp. Ex. 102 | EMAA | 500 | MAA | 20 mass% | 25 mass% | Ammo nia | 75 | B | B | unevalua ble | uneval uable | unevalu able | unevalu able |
| Comp. Ex. 103 | EMAA | 60 | MAA | 20 mass% | 25 mass% | Ammo nia | 75 | B | B | unevalua ble | uneval uable | unevalu able | unevalu able |

As shown in Table 1 above, in Examples, a low-viscosity aqueous dispersion liquid having excellent dispersibility, good storage stability, and besides excellent uniformity of dispersed particles was obtained. In contrast, in Comparative Examples, dispersibility was poor, and, in addition, stability after storage over time was also poor.

Using the above-obtained aqueous dispersion liquid of each Example, this was applied onto a polyethylene terephthalate (PET) film (substrate) with a thickness of 100 µm and dried to form a coating film with a dried film thickness of 10 µm, whereby a layered body film was obtained. All the layered body films obtained exhibited good water-resistant performance.

### <The second embodiment of the present invention>

### (Example 201)

To a 300-ml autoclave, 64 g of an ethylene/methacryl acid copolymer (ethylene content: 80% by mass, methacryl acid content: 20% by mass, MFR = 60 g/10 min), 233 g of ion exchanged water, 5.2 g of diethylethanolamine, and 18.1 g of a 9.8% aqueous ammonia solution were added, and the resulting mixture was stirred at a temperature of 150°C and a stirring rate of 1200 rpm for 1 hour. A degree of diethanolamine neutralization (the percentage of diethanolamine based on a number of moles of carboxyl groups in an ethylene/methacryl acid copolymer) was 30 mol%, and a degree of ammonia neutralization (the percentage of ammonia based on a number of moles of carboxyl groups in an ethylene/methacryl acid copolymer) was 70 mol%. Thereafter, the mixture was slowly cooled with tap water at a cooling rate of 1°C/min to 3°C/min to obtain an aqueous dispersion liquid. The solid content concentration of the aqueous dispersion liquid obtained was 20% by mass.

Then, the aqueous dispersion liquid obtained was evaluated for [1] dispersibility, [2] stability, [3] viscosity, [4] transparency, [5] particle size, and [6] pH. The evaluation method and evaluation criteria are the same as in the evaluation of the aqueous dispersion liquid of Example 101. The results of the measurement evaluation are shown in Table 2 below.

### (Example 202)

An aqueous dispersion liquid was obtained in the same manner as in Example 201 except that the amount of an aqueous ammonia solution was varied from 18.1 g to 12.9 g, the amount of ion exchanged water from 233 g to 238 g, and a degree of ammonia neutralization was 50%, and evaluations were performed. The evaluation results are shown in Table 2 below.

### (Example 203)

An aqueous dispersion liquid was obtained in the same manner as in Example 201 except that the amount of diethylethanolamine was varied from 5.2 g to 3.5 g, the amount of an aqueous ammonia solution from 18.1 g to 25.8 g, the amount of ion exchanged water from 233 g to 227 g, a degree of diethylethanolamine neutralization was 20%, and a degree of ammonia neutralization was 100%, and evaluations were performed. The evaluation results are shown in Table 2 below.

### (Example 204)

An aqueous dispersion liquid was obtained in the same manner as in Example 201 except that the amount of diethylethanolamine was varied from 5.2 g to 3.5 g, the amount of ion exchanged water from 233 g to 234 g, and a degree of diethylethanolamine neutralization was 20%, and evaluations were performed. The evaluation results are shown in Table 2 below.

### (Example 205)

An aqueous dispersion liquid was obtained in the same manner as in Example 201 except that the amount of diethylethanolamine was varied from 5.2 g to 3.5 g, the amount of an aqueous ammonia solution from 18.1 g to 15.5 g, the amount of ion exchanged water from 233 g to 237 g, a degree of diethylethanolamine neutralization was 20%, and a degree of ammonia neutralization was 60%, and evaluations were performed. The evaluation results are shown in Table 2 below.

### (Example 206)

An aqueous dispersion liquid was obtained in the same manner as in Example 201 except that the amount of diethylethanolamine was varied from 5.2 g to 1.7 g, the amount of an aqueous ammonia solution from 18.1 g to 23.2 g, the amount of ion exchanged water from 233 g to 226 g, a degree of diethylethanolamine neutralization was 10%, and a degree of ammonia neutralization was 90%, and evaluations were performed. The evaluation results are shown in Table 2 below.

### (Example 207)

An aqueous dispersion liquid was obtained in the same manner as in Example 201 except that the ethylene/methacryl acid copolymer (ethylene content: 80% by mass, methacryl acid content: 20% by mass, MFR = 60 g/10 min) was replaced with an ethylene/methacryl acid copolymer (ethylene content: 85% by mass, methacryl acid content: 15% by mass, MFR = 60 g/10 min), the amount of diethylethanolamine was varied from 5.2 g to 6.5 g, the amount of an aqueous ammonia solution from 18.1 g to 19.4 g, the amount of ion exchanged water from 233 g to 230 g, a degree of diethylethanolamine neutralization was 50%, and a degree of ammonia neutralization was 100%, and evaluations were performed. The evaluation results are shown in Table 2 below.

### (Example 208)

An aqueous dispersion liquid was obtained in the same manner as in Example 201 except that 64 g of an ethylene/methacryl acid copolymer (ethylene content: 80% by mass, methacryl acid content: 20% by mass, MFR = 60 g/10 min) was replaced with 32 g of an ethylene/methacryl acid copolymer (ethylene content: 89% by mass, methacryl acid content: 11% by mass, MFR = 100 g/10 min), the amount of diethylethanolamine was varied from 5.2 g to 14.4 g, the amount of an aqueous ammonia solution from 18.1 g to 0.7 g, the amount of ion exchanged water from 233 g to 273 g, a degree of diethylethanolamine neutralization was 300%, and a degree of ammonia neutralization was 10%, and evaluations were performed. The evaluation results are shown in Table 2 below.

### (Example 209)

An aqueous dispersion liquid was obtained in the same manner as in Example 201 except that 5.2 g of diethylethanolamine was replaced with 4.0 g of dimethylethanolamine, the amount of ion exchanged water was varied from 233 g to 234 g, and a degree of dimethylethanolamine neutralization was 30%, and evaluations were performed. The evaluation results are shown in Table 2 below.

### (Example 210)

An aqueous dispersion liquid was obtained in the same manner as in Example 201 except that the ethylene/methacryl acid copolymer (ethylene content: 80% by mass, methacryl acid content: 20% by mass, MFR = 60 g/10 min) was replaced with an ethylene/acrylic acid copolymer (ethylene content: 80% by mass, acrylic acid content: 20% by mass, MFR = 300 g/10 min), 5.2 g of diethylethanolamine with 3.2 g of dimethylethanolamine, the amount of an aqueous ammonia solution was varied from 18.1 g to 15.4 g, the amount of ion exchanged water from 233 g to 237 g, a degree of dimethylethanolamine neutralization was 20%, and a degree of ammonia neutralization was 50%, and evaluations were performed. The evaluation results are shown in Table 2 below.

### (Example 211)

An aqueous dispersion liquid was obtained in the same manner as in Example 201 except that the ethylene/methacryl acid copolymer (ethylene content: 80% by mass, methacryl acid content: 20% by mass, MFR = 60 g/10 min) was replaced with an ethylene/acrylic acid copolymer (ethylene content: 80% by mass, acrylic acid content: 20% by mass, MFR = 300 g/10 min), the amount of diethylethanolamine was varied from 5.2 g to 6.3 g, the amount of an aqueous ammonia solution from 18.1 g to 3.1 g, the amount of ion exchanged water from 233 g to 247 g, a degree of diethylethanolamine neutralization was 30%, and a degree of ammonia neutralization was 10%, and evaluations were performed. The evaluation results are shown in Table 2 below.

### (Comparative Example 201)

The same procedure was carried out as in Example 201 except that 64 g of an ethylene/methacryl acid copolymer (ethylene content: 80% by mass, methacryl acid content: 20% by mass, MFR = 60 g/10 min) was replaced with 32 g of an ethylene/methacryl acid copolymer (ethylene content: 96% by mass, methacryl acid content: 4% by mass, MFR = 7 g/10 min), the amount of diethylethanolamine was varied from 5.2 g to 2.6 g, the amount of an aqueous ammonia solution from 18.1 g to 1.3 g, the amount of ion exchanged water from 233 g to 284 g, a degree of diethylethanolamine neutralization was 150%, and a degree of ammonia neutralization was 50%, but the ethylene/methacryl acid copolymer (ethylene content: 96% by mass, methacryl acid content: 4% by mass, MFR = 7 g/10 min) was not dispersed in water and precipitated in a lump. The evaluation results are shown in Table 2 below.

### (Comparative Example 202)

An aqueous dispersion liquid was obtained in the same manner as in Example 201 except that the ethylene/methacryl acid copolymer (ethylene content: 80% by mass, methacryl acid content: 20% by mass, MFR = 60 g/10 min) amount was varied from 64 g to 80 g, 13.1 g of diethylethanolamine was not added, 18.1 g of a 9.8% aqueous ammonia was replaced with 8.2 g of a 29% aqueous ammonia solution, the amount of ion exchanged water was varied from 243 g to 232 g, diethylethanolamine neutralization was not carried out, and a degree of ammonia neutralization was 75 mol%, and evaluations were performed. The evaluation results are shown in Table 2 below.

### (Comparative Example 203)

An aqueous dispersion liquid was obtained in the same manner as in Example 201 except that 64 g of an ethylene/methacryl acid copolymer (ethylene content: 80% by mass, methacryl acid content: 20% by mass, MFR = 60 g/10 min) was replaced with an ethylene/methacryl acid copolymer (ethylene content: 80% by mass, methacryl acid content: 20% by mass, MFR = 500 g/10 min) 80 g, 13.1 g of diethylethanolamine was not added, 18.1 g of a 9.8% aqueous ammonia was replaced with 8.2 g of a 29% aqueous ammonia solution, the amount of ion exchanged water was varied from 243 g to 232 g, diethylethanolamine neutralization was not carried out, and a degree of ammonia neutralization was 75 mol%, and evaluations were performed. The evaluation results are shown in Table 2 below.

The meanings of the abbreviations described in Table 2 are as follows:
- EMAA: Ethylene-methacryl acid copolymer
- EAA: Ethylene/acrylic acid copolymer
- MAA: Methacryl acid
- AA: Acrylic acid
- DMEA: Dimethylethanolamine
- DEEA: Diethylethanolamine

"Content" in the section "(Meth)acrylic acid" shown in Table 2 represents the content of (meth)acrylic acid-derived constituent units [% by mass] based on a total mass of an ethylene/(meth)acrylic acid copolymer.

**[Table 2]**

| | (A) Copolymer | | | | Solid content concentration | (B) Alkanolamine | | (C) Ammonia | Dispersibility | Stability | Viscosity (mPa·s) | Particle size (nm) | Transparency (%) | pH |
|---|---|---|---|---|---|---|---|---|---|---|---|---|---|---|
| | Type | MFR | (Meth)acrylic acid | | | Type | Degree of neutralization (mol%) | Degree of neutralization (mol%) | | | | | | |
| | | | Type | Content | | | | | | | | | | |
| Ex. 201 | EMAA | 60 | MAA | 20 mass% | 20 mass% | DEEA | 30 | 70 | A | A | 1650 | 61 | 2 | 10 |
| Ex. 202 | EMAA | 60 | MAA | 20 mass% | 20 mass% | DEEA | 30 | 50 | A | A | 1460 | 76 | 0.1 | 10 |
| Ex. 203 | EMAA | 60 | MAA | 20 mass% | 20 mass% | DEEA | 20 | 100 | A | A | 1125 | 50 or less | 1 | 10 |
| Ex. 204 | EMAA | 60 | MAA | 20 mass% | 20 mass% | DEEA | 20 | 70 | A | A | 950 | 74 | 0.1 | 10 |
| Ex. 205 | EMAA | 60 | MAA | 20 mass% | 20 mass% | DEEA | 20 | 60 | A | A | 1210 | 70 | 0.1 | 10 |
| Ex. 206 | EMAA | 60 | MAA | 20 mass% | 20 mass% | DEEA | 10 | 90 | A | A | 1800 | 79 | 0.1 | 10 |
| Ex. 207 | EMAA | 60 | MAA | 15 mass% | 20 mass% | DEEA | 50 | 100 | A | A | 17000 | 58 | 0.1 | 11 |
| Ex. 208 | EMAA | 100 | MAA | 11 mass% | 10 mass% | DEEA | 300 | 10 | A | A | 63 | 50 or less | 18 | 11 |
| Ex. 209 | EMAA | 60 | MAA | 20 mass% | 20 mass% | DMEA | 30 | 70 | A | A | 22000 | 58 | 0.8 | 10 |
| Ex. 210 | EAA | 300 | AA | 20 mass% | 20 mass% | DMEA | 20 | 50 | A | A | 46 | 50 or less | 63 | 9 |
| Ex. 211 | EAA | 300 | AA | 20 mass% | 20 mass% | DEEA | 30 | 10 | A | A | 55 | 97 | 0.1 | 9 |
| Comp. Ex. 201 | EMAA | 7 | MAA | 4 mass% | 10 mass% | DEEA | 150 | 50 | B | B | unevaluable | unevaluable | unevaluable | unevaluable |
| Comp. Ex. 202 | EMAA | 60 | MAA | 20 mass% | 25 mass% | Absent | 0 | 75 | B | B | unevaluable | unevaluable | unevaluable | unevaluable |
| Comp. Ex. 203 | EMAA | 500 | MAA | 20 mass% | 25 mass% | Absent | 0 | 75 | B | B | unevaluable | unevaluable | unevaluable | unevaluable |

As shown in Table 2 above, in Examples, a low-viscosity aqueous dispersion liquid having excellent dispersibility, good storage stability, and besides excellent uniformity of dispersed particles was obtained. In contrast, in Comparative Examples, dispersibility was poor, and, in addition, stability after storage over time was also poor.

Using the above-obtained aqueous dispersion liquid of Examples, this was applied onto a polyethylene terephthalate (PET) film (substrate) with a thickness of 100 µm and dried to form a coating film with a dried film thickness of 10 µm, whereby a layered body film was obtained. All the layered body films obtained exhibited good water-resistant performance.

### <The third embodiment of the present invention>

### (Example 301)

To a 300-ml autoclave, 64 g of an ethylene/methacryl acid copolymer (ethylene content: 80% by mass, methacryl acid content: 20% by mass, MFR = 60 g/10 min), 226 g of ion exchanged water, 3.5 g of diethylethanolamine, 26.1 g of a 9.7% aqueous ammonia solution, 5 g of n-butanol (BuOH; the same shall apply hereinafter) were added, and the resulting mixture was stirred at a temperature of 150°C and a stirring rate of 1200 rpm for 1 hour. The amount of n-butanol was 1.5% by mass, a degree of diethanolamine neutralization (the percentage of diethanolamine based on a number of moles of carboxyl groups in an ethylene/methacryl acid copolymer) was 20 mol%, and a degree of ammonia neutralization (the percentage of ammonia based on a number of moles of carboxyl groups in an ethylene/methacryl acid copolymer) was 100 mol%. A ratio [molar ratio] of the total number of moles of diethylethanolamine and ammonia to a number of moles of carboxyl groups in an ethylene/methacryl acid copolymer described above was 120%. Thereafter, the mixture was slowly cooled with tap water at a cooling rate of 1°C/min to 3°C/min to obtain an aqueous dispersion liquid. A solid content concentration of the aqueous dispersion liquid obtained was 20% by mass.

Then, the aqueous dispersion liquid obtained was evaluated for [1] dispersibility, [2] stability, [3] viscosity, [4] transparency, [5] particle size, and [6] pH. The evaluation method and evaluation criteria are the same as in the evaluation of the aqueous dispersion liquid of Example 101. The results of the measurement evaluation are shown in Table 3 below.

### (Example 302)

An aqueous dispersion liquid was obtained in the same manner as in Example 301 except that the amount of an aqueous ammonia solution was varied from 26.1 g to 20.9 g, the amount of ion exchanged water from 226 g to 232 g, and a degree of ammonia neutralization was 80%, and evaluations were performed. The evaluation results are shown in Table 3 below.

### (Example 303)

An aqueous dispersion liquid was obtained in the same manner as in Example 301 except that the amount of diethylethanolamine was varied from 3.5 g to 1.8 g, the amount of ion exchanged water from 226 g to 228 g, and a degree of diethylethanolamine neutralization was 10%, and evaluations were performed. The evaluation results are shown in Table 3 below.

### (Example 304)

An aqueous dispersion liquid was obtained in the same manner as in Example 301 except that the amount of diethylethanolamine was varied from 3.5 g to 1.8 g, the amount of an aqueous ammonia solution from 26.1 g to 20.9 g, the amount of ion exchanged water from 226 g to 233 g, a degree of diethylethanolamine neutralization was 10%, and a degree of ammonia neutralization was 80%, and evaluations were performed. The evaluation results are shown in Table 3 below.

### (Example 305)

An aqueous dispersion liquid was obtained in the same manner as in Example 301 except that 3.5 g of diethylethanolamine was replaced with 2.7 g of dimethylethanolamine, the amount of an aqueous ammonia solution was varied from 26.1 g to 20.9 g, the amount of ion exchanged water from 226 g to 232 g, 5 g of n-butanol was replaced with 5 g isopropanol (IPA; the same shall apply hereinafter), the amount of isopropanol was 1.5% by mass, a degree of dimethylethanolamine neutralization was 20%, and a degree of ammonia neutralization was 80%, and evaluations were performed. The evaluation results are shown in Table 3 below.

### (Example 306)

An aqueous dispersion liquid was obtained in the same manner as in Example 301 except that the ethylene/methacryl acid copolymer (ethylene content: 80% by mass, methacryl acid content: 20% by mass, MFR = 60 g/10 min) was replaced with an ethylene/methacryl acid copolymer (ethylene content: 85% by mass, methacryl acid content: 15% by mass, MFR = 60 g/10 min), the amount of diethylethanolamine was varied from 3.5 g to 6.5 g, the amount of an aqueous ammonia solution from 26.1 g to 19.6 g, the amount ofn-butanol from 5 g to 10 g, the amount of ion exchanged water from 226 g to 230 g, the amount of n-butanol was 3.0% by mass, a degree of diethylethanolamine neutralization was 50%, and a degree of ammonia neutralization was 100%, and evaluations were performed. The evaluation results are shown in Table 3 below.

### (Example 307)

An aqueous dispersion liquid was obtained in the same manner as in Example 301 except that the ethylene/methacryl acid copolymer (ethylene content: 80% by mass, methacryl acid content: 20% by mass, MFR = 60 g/10 min) was replaced with an ethylene/acrylic acid copolymer (ethylene content: 80% by mass, acrylic acid content: 20% by mass, MFR = 300 g/10 min), the amount of diethylethanolamine was varied from 3.5 g to 8.3 g, the amount of an aqueous ammonia solution from 26.1 g to 3.1 g, n-butanol was replaced with isopropanol, the amount of ion exchanged water was varied from 226 g to 245 g, the amount of isopropanol was 1.5% by mass, a degree of diethylethanolamine neutralization was 40%, and a degree of ammonia neutralization was 10%, and evaluations were performed. The evaluation results are shown in Table 3 below.

### (Example 308)

An aqueous dispersion liquid was obtained in the same manner as in Example 301 except that the ethylene/methacryl acid copolymer (ethylene content: 80% by mass, methacryl acid content: 20% by mass, MFR = 60 g/10 min) was replaced with an ethylene/methacryl acid copolymer (ethylene content: 89% by mass, acrylic acid content: 11 % by mass, MFR = 100 g/10 min), the amount of diethylethanolamine was varied from 3.5 g to 14.4 g, the amount of an aqueous ammonia solution from 26.1 g to 0.7 g, the amount of n-butanol from 5 g to 10 g, the amount of ion exchanged water from 226 g to 273 g, the amount of n-butanol was 3.0% by mass, a degree of diethylethanolamine neutralization was 300%, and a degree of ammonia neutralization was 10%, and evaluations were performed. The evaluation results are shown in Table 3 below.

### (Example 309)

An aqueous dispersion liquid was obtained in the same manner as in Example 301 except that the amount of diethylethanolamine was varied from 3.5 g to 14.0 g, an aqueous ammonia solution was not added, the n-butanol amount was varied from 5 g to 10 g, the amount of ion exchanged water from 226 g to 242 g, the amount of n-butanol was 3.0%, a degree of diethanolamine neutralization was 80 mol%, and a degree of ammonia neutralization was 0 mol%, and evaluations were performed. The evaluation results are shown in Table 3 below.

### (Comparative Example 301)

An aqueous dispersion liquid was obtained in the same manner as in Example 301 except that 64 g of an ethylene/methacryl acid copolymer (ethylene content: 80% by mass, methacryl acid content: 20% by mass, MFR = 60 g/10 min) was replaced with 32 g of an ethylene/methacryl acid copolymer (ethylene content: 96% by mass, methacryl acid content: 4% by mass, MFR = 7 g/10 min), 3.5 g of diethylethanolamine with 2.0 g of dimethylethanolamine, the amount of an aqueous ammonia solution was varied from 26.1 g to 1.3 g, 5 g of n-butanol was replaced with 5 g of isopropanol, the amount of ion exchanged water was varied from 226 g to 285 g, the amount of isopropanol was 1.5% by mass, a degree of diethylethanolamine neutralization was 150%, and a degree of ammonia neutralization was 50%, and evaluations were performed. The evaluation results are shown in Table 3 below.

### (Comparative Example 302)

An aqueous dispersion liquid was obtained in the same manner as in Example 301 except that the ethylene/methacryl acid copolymer (ethylene content: 80% by mass, methacryl acid content: 20% by mass, MFR = 60 g/10 min) amount was varied from 64 g to 80 g, diethylethanolamine and n-butanol was not added, 26.1 g of a 9.7% aqueous ammonia was replaced with 8.2 g of a 29% aqueous ammonia solution, the amount of ion exchanged water was varied from 226 g to 232 g, diethylethanolamine neutralization was not carried out, and a degree of ammonia neutralization was 75 mol%, and evaluations were performed. The evaluation results are shown in Table 3 below.

### (Comparative Example 303)

An aqueous dispersion liquid was obtained in the same manner as in Example 301 except that 64 g of an ethylene/methacryl acid copolymer (ethylene content: 80% by mass, methacryl acid content: 20% by mass, MFR = 60 g/10 min) was replaced with 80 g of an ethylene/methacryl acid copolymer (ethylene content: 80% by mass, methacryl acid content: 20% by mass, MFR = 500 g/10 min), diethylethanolamine and n-butanol was not added, 26.1 g of a 9.7% aqueous ammonia was replaced with 8.2 g of a 29% aqueous ammonia solution, the amount of ion exchanged water was varied from 226 g to 232 g, diethylethanolamine neutralization was not carried out, and a degree of ammonia neutralization was 75 mol%, and evaluations were performed. The evaluation results are shown in Table 3 below.

### (Reference Example 301)

An aqueous dispersion liquid was obtained in the same manner as in Example 301 except that the amount of diethylethanolamine was varied from 3.5 g to 5.2 g, 26.1 g of a 9.7% aqueous ammonia solution was replaced with 18.1 g of a 9.8% aqueous ammonia solution, n-butanol was not added, the amount of ion exchanged water varied from 226 g to 233 g, a degree of diethanolamine neutralization was 30 mol%, and a degree of ammonia neutralization was 70 mol%, and evaluations were performed. The evaluation results are shown in Table 3 below.

The meanings of the abbreviations described in Table 3 below are as follows:
- EMAA: : Ethylene-methacryl acid copolymer
- EAA: : Ethylene/acrylic acid copolymer
- MAA: : Methacryl acid
- AA: : Acrylic acid
- DMEA: : Dimethylethanolamine
- DEEA: : Diethylethanolamine

"Content" in the section "(Meth)acrylic acid" shown in Table 3 represents the content of (meth)acrylic acid-derived constituent units [% by mass] based on a total mass of an ethylene/(meth)acrylic acid copolymer.

**[Table 3]**

| | (A) Copolymer | | | | Solid content concentration | (B) + (C) degree of neutralization (mol%)^{*1} | (B) Alkanolamine | | (C) Ammonia | (D) Alcohol | | Dispersibility | Stability | Viscosity (mPa· s) | Particle size (nm) | Transparency (%) | pH |
|---|---|---|---|---|---|---|---|---|---|---|---|---|---|---|---|---|---|
| | Type | MFR | (Meth)acrylic acid | | | | Type | Degree of neutralization (mol%) | Degree of neutralization (mol%) | Type | Amount | | | | | | |
| | | | Type | Content | | | | | | | | | | | | | |
| Ex. 301 | EMAA | 60 | MAA | 20 mass% | 20 mass% | 120 | DEEA | 20 | 100 | BuOH | 1.5 mass% | A | A | 160 | 50 or less | 33 | 10 |
| Ex. 302 | EMAA | 60 | MAA | 20 mass% | 20 mass% | 100 | DEEA | 20 | 80 | BuOH | 1.5 mass% | A | A | 270 | 70 | 15 | 10 |
| Ex. 303 | EMAA | 60 | MAA | 20 mass% | 20 mass% | 110 | DEEA | 10 | 100 | BuOH | 1.5 mass% | A | A | 200 | 70 | 0.7 | 10 |
| Ex. 304 | EMAA | 60 | MAA | 20 mass% | 20 mass% | 90 | DEEA | 10 | 80 | BuOH | 1.5 mass% | A | A | 270 | 85 | 0.1 | 10 |
| Ex. 305 | EMAA | 60 | MAA | 20 mass% | 20 mass% | 100 | DMEA | 20 | 80 | IPA | 1.5 mass% | A | A | 310 | 51 | 1.9 | 10 |
| Ex. 306 | EMAA | 60 | MAA | 15 mass% | 15 mass% | 150 | DEEA | 50 | 100 | BuOH | 3.0 mass% | A | A | 1010 | 50 or less | 72 | 11 |
| Ex. 307 | EAA | 300 | AA | 20 mass% | 20 mass% | 50 | DEEA | 40 | 10 | IPA | 1.5 mass% | A | A | 37 | 66 | 40 | 9 |
| Ex. 308 | EMAA | 100 | MAA | 11 mass% | 10 mass% | 310 | DEEA | 300 | 10 | BuOH | 3.0 mass% | A | A | 16 | 50 or less | 88 | 11 |
| Ex. 309 | EMAA | 60 | MAA | 20 mass% | 20 mass% | 80 | DEEA | 80 | 0 | BuOH | 3.0 mass% | A | A | 540 | 50 or less | 55 | 10 |
| Comp. Ex. 301 | EMAA | 7 | MAA | 4 mass% | 10 mass% | 200 | DMEA | 150 | 50 | IPA | 1.5 mass% | B | B | unevaluable | unevaluable | unevaluable | unevaluable |
| Comp. Ex. 302 | EMAA | 60 | MAA | 20mass% | 25 mass% | 75 | Absent | 0 | 75 | 0 | 0 mass% | B | B | unevaluable | unevaluable | uneval luable | unevaluable |
| Comp. Ex. 303 | EMAA | 500 | MAA | 20 mass% | 25 mass% | 75 | Absent | 0 | 75 | 0 | 0 mass% | B | B | unevaluable | unevaluable | unevaluable | unevaluable |
| Ref. Ex. 301 | EMAA | 60 | MAA | 20 mass% | 20 mass% | 100 | DEEA | 30 | 70 | 0 | 0 mass% | A | A | 1650 | 61 | 2 | 10 |

| | | | | | | | | | | | | | | | | | |
|---|---|---|---|---|---|---|---|---|---|---|---|---|---|---|---|---|---|
| *1: A ratio of the total number of moles of an alkanolamine (B) and an ammonia (C) to a number of moles of carboxyl groups in an ethylene/(meth)acrylic acid copolymer | | | | | | | | | | | | | | | | | |

As shown in Table 3 above, in Examples, a low-viscosity aqueous dispersion liquid having excellent dispersibility, good storage stability, and besides excellent uniformity of dispersed particles was obtained. In contrast, in Comparative Examples, dispersibility was poor, and, in addition, stability after storage over time was also poor.

In Examples above, the embodiments in which the alcohol amount was about 10% by mass based on a total mass of a dispersion liquid were not performed from the standpoint of safety.

Although the description was made in Examples above mainly with reference to the cases where DEEA or DMEA and BuOH or IPA were used as an alkanolamine and as an alcohol, respectively, in addition to these cases, the same results can be obtained also in the case where the other alkanolamine and alcohol exemplified above are used.

Using the above-obtained aqueous dispersion liquid of Examples, this was applied onto a polyethylene terephthalate (PET) film (substrate) with a thickness of 100 µm and dried to form a coating film with a dried film thickness of 10 µm, whereby a layered body film was obtained. All the layered body films obtained exhibited good water-resistant performance.

The disclosures of Japanese Patent Application No. 2010-025612, Japanese Patent Application No. 2010-025613, and Japanese Patent Application No. 2010-095090 are incorporated herein by reference in their entireties.
All documents, patent applications, and technical standards mentioned in this specification are incorporated herein by reference to the same extent as if each individual document, patent application, and technical standard was specifically and individually indicated to be incorporated by reference.

## Claims

1. A process for producing an aqueous dispersion liquid, wherein, in an aqueous medium, an ethylene/(meth)acrylic acid copolymer (A) containing (meth)acrylic acid-derived constituent units in an amount of 8% by mass or more is neutralized by using an alkanolamine (B) and dispersed.

2. The process for producing an aqueous dispersion liquid according to claim 1, wherein said alkanolamine (B) is used in an amount of 40 mol% or more based on a number of moles of carboxyl groups in said ethylene/(meth)acrylic acid copolymer (A).

3. A process for producing an aqueous dispersion liquid, wherein, in an aqueous medium, an ethylene/(meth)acrylic acid copolymer (A) containing (meth)acrylic acid-derived constituent units in an amount of 8% by mass or more is neutralized by using an alkanolamine (B) and an ammonia (C) and dispersed.

4. A process for producing an aqueous dispersion liquid, wherein, in an aqueous medium, an ethylene/(meth)acrylic acid copolymer (A) containing (meth)acrylic acid-derived constituent units in an amount of 8% by mass or more is neutralized by using an alkanolamine (B) or using an alkanolamine (B) and an ammonia (C), and is dispersed in the presence of a monohydric alcohol (D) having two or more carbon atoms, a percentage of which based on a total mass is 1 to 10% by mass.

5. The process for producing an aqueous dispersion liquid according to claim 3 or 4, wherein said alkanolamine (B) and said ammonia (C) are used in an amount of 40 mol% or more in total based on a number of moles of carboxyl groups in said ethylene/(meth)acrylic acid copolymer (A).

6. The process for producing an aqueous dispersion liquid according to claim 5, wherein said alkanolamine (B) is used in an amount of 5 mol% or more based on a number of moles of carboxyl groups in said ethylene/(meth)acrylic acid copolymer (A).

7. The process for producing an aqueous dispersion liquid according to claim 3 or 4, wherein when a total mass of said alkanolamine (B) is b, and a total mass of said ammonia (C) is c, a ratio of b to c (b:c) is from 1:99 to 99:1.

8. The process for producing an aqueous dispersion liquid according to claim 1, 3, or 4, wherein said ethylene/(meth)acrylic acid copolymer (A) has a melt flow rate (according to JIS K 7210-1999, at 190°C and a 2160 g load) of 10 to 1000 g/10 min.

9. The process for producing an aqueous dispersion liquid according to claim 1, 3, or 4, wherein said alkanolamine (B) is represented by general formula (1) below: 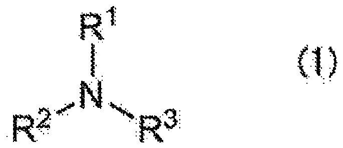 wherein, R¹ to R³ represent independently of each other a hydrogen atom, an alkyl group, or a saturated aliphatic hydrocarbon group having one hydroxyl group, and at least one of R¹ to R³ represents a saturated aliphatic hydrocarbon group having one hydroxyl group.

10. The process for producing an aqueous dispersion liquid according to claim 4, wherein neutralization and dispersion are carried out in the presence of said monohydric alcohol (D) in an amount of 1 to 10% by mass based on a combined mass of water, the ethylene/methacryl acid copolymer, the ammonia, and the monohydric alcohol.

11. The process for producing an aqueous dispersion liquid according to claim 4, wherein said monohydric alcohol (D) is at least one selected from the group consisting of a saturated aliphatic alcohol and an alicyclic alcohol.

12. The process for producing an aqueous dispersion liquid according to claim 1, 3, or 4, wherein a solid content concentration of said ethylene/(meth)acrylic acid copolymer (A) is 5 to 30% by mass based on a total mass of the aqueous dispersion liquid.

13. An aqueous dispersion liquid produced by using the process for producing an aqueous dispersion liquid according to claim 1, 3, or 4.

14. The aqueous dispersion liquid according to claim 13, wherein a viscosity of the aqueous dispersion liquid at 25°C is 100 to 20,000 mPa·s.

15. A layered body comprising a substrate and a film formed on the substrate using the aqueous dispersion liquid according to claim 13.
